# EUROPÄISCHE PATENTSCHRIFT

(11) **EP 2 294 163 B1**
(45) Veröffentlichungstag und Bekanntmachung des Hinweises auf die Patenterteilung: **21.03.2018**
(21) Anmeldenummer: 09741732.3
(22) Anmeldetag: 24.04.2009
(51) Int. Cl.: C10G 25/00, C10G 31/11, C10G 45/02, F02M 27/04, F02M 31/14

(54) **VERFAHREN ZUR REDUZIERUNG DES SCHWEFELGEHALTES EINES SCHWEFELHALTIGEN, FLÜSSIGEN KRAFTSTOFFS FÜR DIE VERWENDUNG IN EINEM STROMERZEUGUNGSAGGREGAT SOWIE VORRICHTUNG ZUR DURCHFÜHRUNG DES VERFAHRENS**
METHOD FOR REDUCING THE SULPHUR CONTENT OF A SULPHUROUS LIQUID FUEL FOR USE IN A CURRENT-GENERATING SET, AND DEVICE FOR CARRYING OUT SAID METHOD
PROCÉDÉ DE RÉDUCTION DE LA TENEUR EN SOUFRE D'UN CARBURANT LIQUIDE SOUFRÉ POUR L'UTILISATION DANS UN DISPOSITIF ÉLECTROGÈNE ET DISPOSITIF DE MISE EN OEUVRE DU PROCÉDÉ

(30) Priorität: 09.05.2008 DE 102008022972
(43) Veröffentlichungstag der Anmeldung: 16.03.2011
(73) Patentinhaber: Forschungszentrum Jülich GmbH, 52425 Jülich (DE)
(72) Erfinder: LATZ, Jochen, 50931 Köln (DE); PETERS, Ralf, 52146 Würselen (DE); STOLTEN, Detlef, 52076 Aachen (DE); WERHAHN, Johannes, 50674 Köln (DE)
(86) Internationale Anmeldenummer: PCT/DE2009/000575
(87) Internationale Veröffentlichungsnummer: WO 2009/135459

(56) Entgegenhaltungen:
- WO-A1-03/091363
- DE-A1- 10 234 820
- US-A1- 2006 169 639
- DATABASE WPI Week 200517 Thomson Scientific, London, GB; AN 2005-156891 XP002558901 -& JP 2005 042051 A (NISSAN MOTOR CO LTD) 17. Februar 2005 (2005-02-17)

## Beschreibung

Die Erfindung betrifft ein Verfahren zur Reduzierung des Schwefelgehaltes eines schwefelhaltigen, flüssigen Kraftstoffs, insbesondere Kerosin, welcher für den Einsatz in einem Stromerzeugungsaggregat vorgesehen ist. Ferner betrifft die Erfindung eine Vorrichtung zur Durchführung dieses Verfahrens, insbesondere in Kombination mit einem Bordstromaggregat.

### Stand der Technik

Elektrische Energie kann in unterschiedlichen mobilen Anwendungen durch den Einsatz von Hilfskrafterzeugern (Auxiliary Power Units = APUs) bereitgestellt werden. Insbesondere in Flugzeugen wird eine APU nicht für den Antrieb des Fluggeräts konzipiert, sondern sie liefert in der Regel elektrische Energie und gegebenenfalls auch Druckluft oder Hydraulikdruck zum autarken Betrieb der Flugzeugausrüstung am Boden, ohne dass die Haupttriebwerke dafür laufen müssen. Eine APU besteht aus einer Verbrennungskraftmaschine, heute meist eine Gasturbine, früher auch ein Verbrennungsmotor, einem Generator und diversen Hilfsaggregaten zum Regeln der APU. Als besonders emissionsarm und mit guten Wirkungsgraden haben sich neuerdings APUs auf Basis von Brennstoffzellen herausgestellt, die vorteilhaft mit dem Fahrzeugkraftstoff betrieben werden und die Bordsysteme effizienter mit Elektrizität versorgen. Die Nachfrage hiernach steigt in dem Maße, wie Komfort- und Sicherheitsfunktionen sowie Steuer- und Kontrollfunktionen zunehmend elektrisch realisiert werden müssen.

In und für den direkten Bereich um Häfen und Flughäfen gibt es darüber hinaus zunehmend die Forderung nach einer Verbesserung der lokalen Luftqualität, wozu der Einsatz von Brennstoffzellen-APUs in der Bordstromerzeugung von Schiffen bzw. Flugzeugen substanziell beitragen kann. APUs versprechen außerdem einen besseren Wirkungsgrad und geringere Emissionen, u. a. wenn sie in LKW zur Bordstromerzeugung eingesetzt werden.

Der zum Betrieb der in der APU eingesetzten Brennstoffzelle benötigte Wasserstoff wird durch die Reformierung des für das Antriebsaggregat verwendeten flüssigen Mineralölprodukts erzeugt. Der Reformierungsprozess erfordert jedoch, dass der eingesetzte Kraftstoff nicht mehr als 10 ppm Schwefel enthält.

Aufgrund gesetzlicher Vorgaben zur Reduzierung der Schwefeldioxidemissionen wurde der Grenzwert für den Schwefelgehalt flüssiger Kraftstoffe in der Vergangenheit immer weiter abgesenkt. Heute dürfen Dieselkraftstoffe in der EU bis zu 10 ppm, Heizöl EL und Schiffsdiesel für Binnenschiffe 1000 ppm sowie Kerosin Jet-A 1 bis zu 3000 ppm Schwefel enthalten. In der Praxis enthält Kerosin in der EU jedoch in der Regel schon jetzt weniger als 800 ppm Schwefel.

Da diese Schwefelgehalte zu hoch für die direkte Verwendung des Kraftstoffs in einem Brennstoffzellensystem sind, muss eine Entschwefelung auf den Wert von maximal 10 ppm Schwefel vor einer Einleitung in die APU realisiert werden.

Das in der Raffinerietechnik fast ausschließlich angewendete Verfahren zur Entschwefelung flüssiger Kraftstoffe ist die hydrierende Entschwefelung in der Gasphase oder im Rieselbettreaktor. Für leichte Mineralölfraktionen wird der gasförmige Kraftstoff zusammen mit dem für die Reaktion notwendigen Wasserstoff durch den Reaktor geleitet. Der Wasserstoff kann entweder als reines Gas oder als Teil einer Gasmischung zugefügt werden. Für schwerere Mineralölfraktionen wird der flüssige Kraftstoff zusammen mit gasförmigem Wasserstoff durch einen dreiphasigen Rieselbettreaktor geleitet. Im Reaktor liegt ein fester Katalysator, flüssiger Kraftstoff sowie gasförmiger Wasserstoff vor. Dem Reaktor nachgeschaltet wird das überschüssige wasserstoffhaltige Gas abgetrennt, komprimiert und dem Prozess wieder zugeführt. Der Produktstrom enthält nach der Hydrierung Schwefelwasserstoff, der zum Beispiel durch ein Adsorptions- oder Aminwäscheverfahren abgetrennt werden kann.

Ein Nachteil der Hydrierung in der Gasphase sowie im Rieselbettreaktor ist, dass aufgrund schlechter Phasenübergänge ein sehr großer Wasserstoffüberschuss im Reaktor erforderlich ist. Der überschüssige Wasserstoff muss hinter dem Reaktor wieder abgetrennt, komprimiert und dem Reaktor wieder zugeführt werden. Damit ist ein erheblicher energetischer und apparativer Aufwand verbunden. Soll ein wasserstoffhaltiges Gasgemisch anstelle des reinen Wasserstoffs zur Hydrierung eingesetzt werden, reichert sich durch die erforderliche Rezyklierung der Wasserstoffgehalt im Reaktor ab. Damit ist der Betrieb mit einem wasserstoffhaltigen Gasgemisch regelmäßig nicht wirtschaftlich.

Neuartige Verfahren, wie z.B. der Hydrofiner mit Vorsättiger oder die Mebranentschwefelung, befinden sich derzeit im Forschungsstadium. Erste Anlagen, die auf der adsorptiven Entschwefelung basieren, wurden in den vergangenen Jahren in Betrieb genommen.

Zur on-board Entschwefelung können prinzipiell ebenfalls die vorgenannten Entschwefelungsverfahren eingesetzt werden, wie die Membranentschwefelung, die thermische Abtrennung, die Adsorption und der Hydrofiner mit Vorsättiger. Die Entschwefelung erfordert in allen Fällen jedoch einen zusätzlichen Energieaufwand, der in der Regel zum Großteil als Wärmestrom von außen zugeführt werden muss. Ausgereifte Verfahren zur Entschwefelung flüssiger Kraftstoffe in mobilen Brennstoffzellensystemen sind bisher nicht verfügbar.

Ein maßgebliches Hindernis bei der Entwicklung neuartiger Entschwefelungsverfahren für den mobilen Einsatz ist der hohe Energiebedarf der Entschwefelung mit den damit verbundenen Wirkungsgradeinbußen. Bisher wird dem Entschwefelungsprozess, z. B. der Membranentschwefelung, von außen Wärme zugeführt, was zu einer Verringerung des Wirkungsgrades der APU führt. Der Betrieb der Entschwefelungsverfahren im optimalen Betriebspunkt erfordert eine hohe Energiezufuhr. Zur Optimierung des Wirkungsgrades des Gesamtsystems wird die Energiezufuhr der Entschwefelung häufig auf Kosten der Entschwefelungsleistung begrenzt. Aufgrund dieser weniger effizienten Arbeitsweise ist somit regelmäßig ein größeres und schwereres System zur Entschwefelung erforderlich.

Die APU-Technologie ist insbesondere auch im Flugzeugbereich von großer Bedeutung. Die bislang eingesetzte Lösung, bei dem die Stromversorgung mittels einer Turbine sichergestellt wird, verursacht jedoch einen hohen Schadstoffausstoß und besitzt nur einen geringen Wirkungsgrad. Für die Umsetzung der Brennstoffzellentechnologie als alternative APU im Flugzeug ergeben sich jedoch zusätzliche Probleme. Nicht nur hinsichtlich Sicherheit, Zuverlässigkeit und niedrigem Gewicht, sondern auch wegen der schwierigen Einsatzbedingungen - als Brennstoffbasis wird Kerosin verwendet, die Umgebungstemperaturen sind äußerst niedrig und die Sauerstoffkonzentration bei großen Flughöhen ist sehr gering - sind die Anforderungen besonders hoch. Auch Erschütterungen bei Start und Landung stellen beträchtliche Herausforderungen für die Ingenieure dar. Die prinzipielle Eignung einer PEM-Brennstoffzelle als Alternative für eine APU in einem Flugzeug sowie die Anpassung der Luftversorgung wurde schon in der EP 0 957 026 B1 beschrieben. Allerdings wird dort keine Entschwefelung erwähnt.

Im Rahmen des von der Europäischen Union geförderten Projekts "Power Optimized Aircraft" (POA) haben die Forscher des Fraunhofer-Instituts für Solare Energiesysteme ISE und des Deutschen Zentrums für Luft- und Raumfahrt (DLR) zusammen mit der Firma Liebherr Aerospace zum ersten Mal in Europa einen Kerosin-Reformer mit einem am Forschungszentrum Jülich (FZJ) entwickelten SOFC-Brennstoffzellenstapel gekoppelt und im Systemverbund betrieben. Als Brennstoff wurde jedoch bereits entschwefeltes Kerosin Jet A-1 eingesetzt.

Bei dem Einsatz eines Hochtemperatur-Brennstoffzellenstapels als APU wird eine vorgeschaltete Entschwefelung benötigt. In einem Flugzeug können sich dadurch Probleme ergeben, dass die APU regelmäßig weit entfernt vom eigentlichen Kraftstoffvorrat, der sich üblicherweise in den Tragflächen befindet, angeordnet ist. Beispielsweise sind bisherige APUs typischerweise zwischen den Haupträdern eines Flugzeugs oder auch im Heck untergebracht. Beim Einsatz eines Hochtemperatur-Brennstoffzellenstapels als APU könnte sich für eine Entschwefelung mittels einer Membran das folgende Szenario ergeben.

Der Kraftstoffstrom würde zunächst aus den Tanks in den Flügeln komplett in das Heck zur Membran geleitet, und dort in zwei Teilströme aufgeteilt werden. Je nach Art der verwendeten Membran würde entweder der Permeatstrom oder der Retentatstrom mit dem abgesenkten Schwefelgehalt gegebenenfalls in eine zweite Stufe (adsorptiven Feinentschwefelung) geführt werden und anschließend zum Reformer weitergeleitet werden. Der sich ergebende, mit Schwefel angereicherte Rückstand kann zur Verbrennung in der Flugzeugturbine direkt verwendet werden. Der Feedstrom der Membranentschwefelung müsste dazu jedoch zunächst auf ca. 80 - 135 °C aufgeheizt werden. Das Membranverfahren arbeitet optimal, wenn der Permeatstrom weniger als 10 Vol.-%, besser weniger als 5 Vol.-%, und besonders vorteilhaft wenn er sogar weniger als 2 Vol.-% des zugeführten Feedkraftstoffs beträgt.
Nachteilig wäre in diesem Fall, dass bei einer 2 Vol.-%igen Abtrennung die 50-fache Kraftstoffmenge vom Flugzeugtank im Tragflügel zur APU im Heck des Flugzeugs und wieder zurück transportiert werden muss, was in der Regel nicht praktikabel ist. Außerdem müsste der 50-fache Kraftstoffstrom auf ca. 80 bis 120 °C erhitzt werden, wozu eine große Wärmemenge erforderlich ist. Die zugeführte Wärmemenge würde wahrscheinlich größtenteils verloren gehen, da der Kraftstoff bei der Rückleitung bis zum Tank oder der Turbine wieder abkühlt.

Da dies nicht wirtschaftlich ist, könnte alternativ nur der 2-fache Kraftstoffstrom zur Membranentschwefelung geleitet werden, so dass der Permeatstrom ca. 50 % des Feedstroms beträgt. In diesem Fall wäre die Membranentschwefelung regelmäßig deutlich ineffizienter und die Abreicherung des Schwefels im Permeat deutlich geringer. Bei der adsorptiven Entschwefelung müsste zur Regeneration des Adsorbers ein Gasstrom auf 350 - 500 °C erhitzt werden. In einer APU mit einer Brennstoffzelle mit Polymerelektrolytbrennstoffzelle ist jedoch in der Regel keine Abwärme mit ausreichender Temperatur verfügbar, so dass die Wärmeenergie durch Verbrennung von Kerosin erzeugt werden müsste. Dies ist wiederum mit deutlichen Wirkungsgradeinbußen verbunden. Gleiches würde für die thermische Abtrennung und die hydrierende Entschwefelung mit Vorsättiger gelten. Bei beiden Verfahren müsste ein Kraftstoffstrom auf 200 - 300 °C bzw. 350 - 400 °C erhitzt werden.

In US 2006/169639 A1 sind Fahrzeuge mit Brennkraftmaschinen, beispielsweise auch Flugzeuge, beschrieben, die mit schwefelhaltigem Kraft- oder Treibstoff betrieben werden. Gleichzeitig wird ein entschwefelter flüssiger Brennstoff zur Verfügung gestellt, der zum Betrieb von APUs, also zur Stromerzeugung, verwendet werden soll. D1 offenbart zudem ein Verfahren zur Entschwefelung eines Flüssigkraftstoff-Teilstroms durch ein zweistufiges Membrantrennverfahren zur Verwendung an Bord eines Fahrzeugs, wobei der entschwefelte Teilstrom in Brennstoffzellen-APUs eingesetzt werden soll, und bei dem auch die Nutzung der thermischen Energie des primären Antriebsaggregats zur Erhitzung des der Membrantrennung zuzuführenden Kraftstoffs für einen effektiven Betrieb der Trennstufen vorgesehen ist.

Aus DE 102 34 820 A1 ist ein Verfahren bekannt, bei dem ein flüssiger, schwefelhaltiger Kraftstoff unter Ausnutzung der Abwärme eines Kühlkreislaufes erhitzt und entschwefelt wird. Der entschwefelte Kraftstoff steht anschließend sowohl für Verbrennungsmotoren (Antriebsaggregate) oder Brennstoffzellen (Stromerzeugungseinrichtungen) zur Verfügung. Die beiden Systeme und auch die damit verbundenen Kühlkreisläufe können auch kombiniert werden.

### Aufgabe und Lösung

Der Erfindung liegt die Aufgabe zugrunde, ein Verfahren zur Reduzierung des Schwefelgehaltes in einem schwefelhaltigen, flüssigen Kraftstoff, welches für den Einsatz in einem Stromerzeugungsaggregat auf Basis einer Brennstoffzelle vorgesehen ist, bereitzustellen, welches in Kombination mit einem Antriebsaggregat unter energetischen Gesichtspunkten besonders effektiv ist, und somit den Gesamtwirkungsgrad im Vergleich zum Stand der Technik vorteilhaft erhöht. Ferner ist es die Aufgabe der Erfindung, eine Vorrichtung zur Durchführung des vorgenannten erfindungsgemäßen Verfahrens zur Verfügung zu stellen.

Die Aufgaben der Erfindung werden gelöst durch ein Verfahren zur Reduzierung des Schwefelgehaltes eines schwefelhaltigen, flüssigen Kraftstoffs gemäß Anspruch 1, sowie einer Vorrichtung zur Reduzierung des Schwefelgehaltes eines schwefelhaltigen, flüssigen Kraftstoffs gemäß Anspruch 8. Vorteilhafte Ausgestaltungen des Verfahrens und der Vorrichtung ergeben sich aus den jeweils rückbezogenen Ansprüchen.

### Gegenstand der Erfindung

Da die Erfindung das Zusammenspiel eines Verfahrens mit einer geeigneten Vorrichtung betrifft, werden nachfolgend das Verfahren und die Vorrichtung zur Durchführung teilweise parallel beschrieben.

Der Grundgedanke der Erfindung besteht darin, den endothermen Prozess der Reduzierung des Schwefelgehaltes, der nachfolgend auch kurz Entschwefelung genannt wird, eines schwefelhaltigen, flüssigen Kraftstoffs für ein mobiles Stromerzeugungsgerät (APU) auf Basis von Brennstoffzellentechnologie in einem Flugzeug derart geeignet mit einer Antriebsturbine zu verbinden, dass insgesamt eine gesteigerte Effizienz des gesamten Verfahrens ermöglicht wird.

Das erfindungsgemäße Verfahren sieht vor, die Wärme benötigende Reduzierung des Schwefelgehaltes des Kraftstoffs für die APU derart in das Umfeld einer Antriebsturbine zu integrieren, und einen Teil der Wärmeenergie des Antriebsaggregats derart auszukoppeln, dass dessen Wirkungsgrad dadurch nicht verringert oder vorteilhaft sogar gesteigert werden kann. Die eigentliche Entschwefelung (Reduzierung des Schwefelgehaltes) findet dabei nicht zwingend im direkten Umfeld der APU statt, die in einem Flugzeug häufig im Heck untergebracht ist, sondern direkt in der Nähe der Wärme abgebenden Antriebsturbine.

Nachfolgend wird das erfindungsgemäße Verfahren und die Vorrichtung zur Durchführung des Verfahrens ausführlicher verdeutlicht. Nicht erfindungsgemäß kann das Prinzip aber ebenso für andere mobile Einsätze einer APU angewandt werden, insbesondere auch auf Schiffen oder anderen Fahrzeugen.

Im Rahmen der Erfindung ist vorgesehen, dass der Kraftstoff durch Nutzung der Abwärme des Antriebsaggregats oder durch eine Zwischenkühlung im Verdichter des Antriebsaggregats zumindest teilweise auf die benötigte Temperatur für die Reduzierung des Schwefelgehaltes gebracht wird. Die teilweise Entschwefelung des Kraftstoffs selbst erfolgt über eine oder mehrere Membranen, wobei eine Aufteilung in einen mit Schwefel angereicherten und einen schwefelreduzierten Kraftstoffstrom erfolgt. Der mit Schwefel angereicherte Kraftstoffteilstrom wird auf kurzem Weg zur Verbrennungskammer des Antriebsaggregats geführt, ohne dass es zu nennenswerten Temperaturverlusten kommt. In der Gesamtbetrachtung wird typischerweise ein nur sehr geringer Teil des Kraftstoffs, insbesondere weniger als 10 Vol.-% des gesamten, für die Antriebsmaschine und die APU benötigten Kraftstoffstroms, als entschwefelter Kraftstoff weiter zur APU geleitet. Andere, nicht erfindungsgemäße Verfahren zur Reduzierung des Schwefelgehaltes des Kraftstoffs sind beispielsweise der Einsatz eines Hydrofiners, gegebenenfalls mit einem Vorsättiger, oder auch ein Adsorber. Diese anderen Verfahren benötigen dabei in der Regel andere Kraftstofftemperaturen, und damit auch gegebenenfalls eine andere Zuführung der Wärme, als bei Einsatz einer Membran. Dies wird nachfolgend im Abschnitt des speziellen Beschreibungsteils noch weiter ausgeführt. Sowohl die Zwischenkühlung im Verdichter als auch die Rekuperation führen in der Regel zu einer Steigerung des Wirkungsgrades des Antriebsaggregats. Diese Wirkungsgradsteigerung geht jedoch zum Teil wieder dadurch verloren, dass Verdampfungsenthalpie für den entschwefelten Teil des Kraftstoffs entzogen wird, der jedoch auf Grund seines geringen Anteils von weniger als 10 Vol.-% insgesamt dennoch zu einer Wirkungsgradsteigerung für das gesamte System führt.

Besonders vorteilhaft gestaltet sich das Verfahren, wenn der Anteil an abgetrenntem, entschwefeltem Kraftstoff auf weniger als 15 Vol.-%, insbesondere auf weniger als 10 Vol.-%, und insbesondere auf weniger as 2 Vol.-%, zum Beispiel ca. 0,5 Vol.-%, reduziert wird.

Das Prinzip der Wärmeauskopplung für die Entschwefelung kann nicht nur für den Fall einer Entschwefelung durch eine Membran angewandt werden. Für eine Membranentschwefelung wäre eine vorherige Aufheizung des Kraftstoffs auf ca. 80 bis 120 °C notwendig. Die übrigen, nicht erfindungsgemäßen Entschwefelungsverfahren lassen sich ebenfalls mit derselben vorteilhaften Wirkungsweise energetisch günstig integrieren. Selbst die für die Regenerierung eines Adsorbens, oder für den Einsatz eines Hydrofiners benötigten 350 bis 500 °C können vorteilhaft durch die Nutzung der Wärme des Antriebsaggregats zur Verfügung gestellt werden. Die Erhitzung der Luft zur Regeneration des Adsorbers kann beispielsweise mit der Vorwärmung der Verbrennungsluft für die Brennkammer kombiniert werden. Die Energie zum Erhitzen der Kaftstoffströme für die Membranentschwefelung könnte beispielsweise auch durch eine Zwischenkühlung im Verdichter ausgekoppelt werden.

### Spezieller Beschreibungsteil

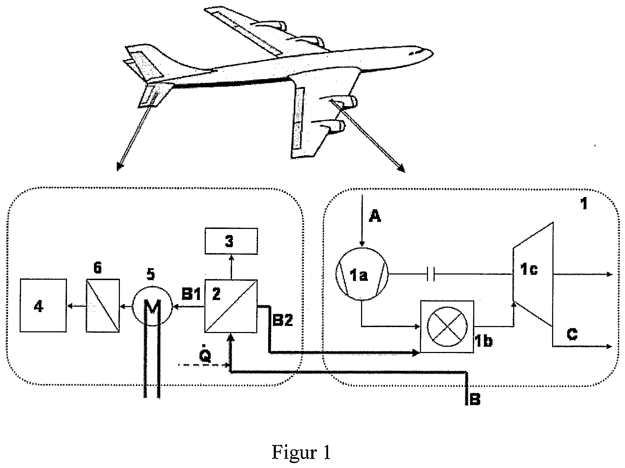

Nachfolgend wird die Erfindung der Kerosinentschwefelung in einem Flugzeug anhand zweier Prinzipskizzen und eines konkreten Rechenbeispiels verdeutlicht, ohne dass es dadurch zu einer Einschränkung des Schutzbereiches kommt. In den Figuren 1 bis 3 bedeuten:
- 1: Antriebsturbine mit
- 1a.: Verdichter
- 1b.: Brennkammer
- 1c.: Antrieb

- 2: Membraneinrichtung
- 3: Verdichter
- 4: APU, Brennstoffzellenstapel
- 5: Wärmeaustauscher
- 6: Separator
- 7: Vorsättiger für Hydrofiner
- 8: Hydrofiner
- 9: H₂S-Abtrennung

und als Betriebsstoffe:
   - A: Luft
   - B: Kraftstoff
   - B1: schwefelarme Fraktion
   - B2: schwefelreiche Fraktion
   - C: Abgas
   - D: Inertgas
   - E: Reformatgas
   - *Q*: Wärme

In Figur 1 ist der nicht erfindungsgemäße Fall dargestellt, dass sich das Antriebsaggregat und der Kraftstoffvorrat in der Tragfläche eines Flugzeugs befinden, während die Auxiliary Power Units (APU) im Heck angeordnet ist. Wird als APU ein Hochtemperatur-Polymer-Brennstoffzellenstapel mit integrierter Reformierung eingesetzt, so muss der dort eingesetzte Kraftstoff zunächst entschwefelt werden (< 10 ppm S). Dafür würde der gesamte Kraftstoff aus den Vorratsbehältern in den Tragflächen in das Heck geleitet, für die Entschwefelung entsprechend aufgeheizt, in eine schwefelreiche und eine schwefelarme Fraktion aufgeteilt, und der Großteil des Kraftstoffs als schwefelreiche Fraktion wieder zurück transportiert, um in die Brennkammer der Antriebsturbine geleitet zu werden.

Die schwefelarme Fraktion könnte nach gegebenenfalls weiterer Aufarbeitung in dem Brennstoffzellenstapel eingesetzt werden.

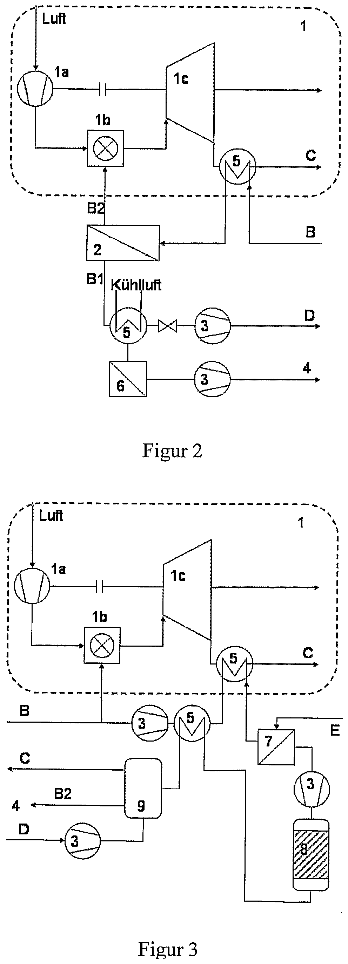

In Figur 2 ist eine erfindungsgemäße Ausgestaltung der Erfindung dargestellt. Der Prozess des Aufheizens des Kraftstoffs und der Entschwefelung wird in unmittelbarer Nähe zu den Antriebsaggregaten durchgeführt. Dies bedeutet die vorteilhafte Nutzung der Abwärme aus dem Antriebsprozess, entweder aus dem Abgas und/oder einer Zwischenkühlung aus dem Luftverdichter, und kurze Wege für den Großteil des aufgeheizten Kraftstoffs zur Turbine. Nur ein sehr geringer Anteil des Kraftstoffs, nämlich die schwefelarme Fraktion, wird in das Heck zum Brennstoffzellenstapel geleitet. Die weiteren Behandlungsschritte der schwefelarmen Fraktion, z. B. eine weitere Membrantrenneinheit, eine Adsorption, die Kühlung und die Separation, können dabei einzeln oder zusammen, wahlweise in der Nähe des Antriebsaggregats oder in der Nähe des Brennstoffzellenstapels, angeordnet sein.

In Figur 3 wird eine weitere, nicht erfindungsgemäße Ausgestaltung des Verfahrens bzw. einer Vorrichtung zur Durchführung gezeigt. Wird anstatt der Membran die hydrierende Entschwefelung mit Vorsättiger eingesetzt, wird der Reaktor wiederum vorteilhaft in unmittelbarer Nähe zur Antriebsturbine angeordnet. Aus der Kraftstoffzufuhr der Turbine wird ein Teilstrom abgezweigt und auf den für den Hydrofiner benötigten Druck von 20 - 70 bar komprimiert. Der komprimierte Kraftstoffstrom wird zunächst mit dem Produkt des Hydrofiners vorgewärmt und anschließend mit der Abwärme der Turbine auf die Reaktionstemperatur von 330 - 400°C erhitzt. Nachdem zusätzlich ein wasserstoffreicher Reformatgasstrom zugeführt wurde, werden die Schwefelverbindungen im Kraftstoff in Schwefelwasserstoff umgewandelt. Anschließend wird der Schwefelwasserstoff abgetrennt, so dass der Schwefelgehalt im Produkt, das zur APU in das Heck des Flugzeuges geleitet wird, in der Regel nicht mehr als 10 ppm beträgt.

Der Gewinn in der Effizienz des Gesamtsystems entsteht hauptsächlich aus der positiven Ausnutzung des Wärmeentzugs bei den Antriebsaggregaten und aus den verringerten Wärmeverlusten bei der Weiterleitung des aufgeheizten Kraftstoffs zur Turbine, sowie der geringeren Pumpleistung für den Großteil des Kraftstoffs. Ein weiterer, für Flugzeuge wichtiger Gewinn ist die Gewichts- und Platzeinsparung, da eine Rückführungsleitung für den gesamten Kraftstoff entfällt und die Kraftstoffleitung zur APU wesentlich kleiner dimensioniert sein kann, wenn die Rückleitung entfällt.

### Rechenbeispiel:

Ein Airbus A320 verbraucht etwa 3200 L/h Kerosin. Der gesamte Kraftstoff wird vor dem Eintritt in die Brennkammer der Gasturbine durch einen Wärmeaustauscher geleitet und auf ca. 80 °C erhitzt. Die zugeführte Wärmemenge wird in Form einer Zwischenkühlung im Verdichter oder aus der Abwärme des Abgasstroms gewonnen.

Anschließend wird der Kraftstoffstrom über eine in der Nähe der Turbine angeordnete Membranoberfläche geleitet. Durch Anlegen eines Vakuums permeiert bzw. verdampft ca. 1,4 % (Vol.) des zugeführten Kraftstoffs (Feed) durch die Membran, insbesondere die leichter siedende Fraktion, die regelmäßig einen geringeren Schwefelgehalt aufweist. Dies entspricht mit 45 L/h dem Verbrauch einer APU mit einer typischen Größe von 150 kWₑₗ. Der ca. 80 °C heiße Retentatstrom aus der Membraneinheit mit der schwefelreicheren, schwereren Fraktion wird vorteilhaft durch kurze isolierte Leitungen der in der Nähe befindlichen Brennkammer des Antriebsaggregats, bzw. der Turbine zugeführt.

Je nach Gegebenheiten und Rahmenbedingungen kann ein Fachmann auf diesem Gebiet weitere Abwandlungen der Entschwefelung ohne weiteres erfinderisches Zutun vorsehen. Die abgetrennte, schwefelärmere, leichtere Fraktion (Permeat) kann beispielsweise optional auch noch einer weiteren Membranstufe zugeführt werden. Diese zweite Membranstufe umfasst vorteilhaft eine organische Membran, durch die insbesondere eine schwefelhaltige Fraktion beispielsweise als Permeat abgetrennt werden kann. Das Retentat dieser zweiten Membranstufe wird anschließend gegebenenfalls einer Adsorption zugeführt, in der der Schwefelgehalt des Kraftstoffs auf unter 10 ppm reduziert wird. Dieser so aufgearbeitete Kraftstoff kann anschließend der Brennstoffzelle, insbesondere einer Hochtemperatur-Polymer-Brennstoffzelle, zugeführt werden.

Sowohl die Zwischenkühlung im Verdichter als auch die Rekuperation führen in der Regel zu einer Steigerung des Wirkungsgrades der Turbine. Nur ein geringer Teil dieser Wirkungsgradsteigerung geht dadurch verloren, dass die Verdampfungsenthalpie für 1,4 Vol.-% des Kraftstoffs an der Membran entzogen wird.

Um die APU vorteilhaft auch zu betrieben, wenn das Antriebsaggregat nicht in Betrieb ist, kann optional ein Puffertank vorgesehen werden. Mit einem Puffertank mit ca. 450 L Inhalt kann die APU in diesem Fall beispielsweise 10 h unabhängig betrieben werden.

## Patentansprüche

1. Verfahren zur Reduzierung des Schwefelgehaltes eines schwefelhaltigen, flüssigen Kraftstoffs für ein mobiles Stromerzeugungsgerät, welches in Kombination mit einer Antriebsturbine in einem Flugzeug betrieben wird, wobei die Antriebsturbine mit einem schwefelhaltigen flüssigen Kraftstoff betrieben wird, mit den Schritten
- schwefelhaltiger, flüssiger Kraftstoff wird durch die Wärmeenergie der Antriebsturbine aufgeheizt,
- der aufgeheizte schwefelhaltige, flüssige Kraftstoff wird zumindest teilweise in der Nähe der Wärme abgebenden Antriebsturbine entschwefelt,
- wobei die Reduzierung des Schwefelgehaltes durch wenigstens eine Membran erfolgt, und bei dem neben einer schwefelarmen Fraktion eine schwefelreiche Fraktion erhalten wird, die der Antriebsturbine zugeführt wird,
- die schwefelarme Fraktion des Kraftstoffs wird der Stromerzeugungseinrichtung zugeführt.

2. Verfahren nach Anspruch 1, bei dem eine Hochtemperatur-Polymer-Brennstoffzelle oder ein Hochtemperatur-Polymer-Brennstoffzellenstapel als Stromerzeugungseinrichtung eingesetzt wird.

3. Verfahren nach einem der Ansprüche 1 bis 2, bei dem die benötigte Wärme dem Abgas der Antriebsturbine oder einem Verdichter der Antriebsturbine entzogen wird.

4. Verfahren nach einem der Ansprüche 1 bis 3, bei dem an wenigstens eine Membran ein Vakuum von weniger als 100 mbar, insbesondere von 50 mbar, angelegt wird.

5. Verfahren nach einem der Ansprüche 1 bis 4, bei dem weniger als 15 Vol.-% des für die Antriebsturbine und die Stromerzeugungseinrichtung benötigten Kraftstoffs, insbesondere weniger als 10 5 Vol.-% des Kraftstoffs als schwefelarmer Kraftstoff der Stromerzeugungseinrichtung zugeführt wird.

6. Verfahren nach einem der Ansprüche 1 bis 5, bei dem der Kraftstoff vor der Reduzierung des Schwefelgehaltes auf eine Temperatur oberhalb von 60 °C, insbesondere auf eine Temperatur oberhalb von 80 °C, aufgeheizt wird.

7. Verfahren nach einem der Ansprüche 1 bis 6, bei dem der schwefelarme Kraftstoff einen Schwefelgehalt von weniger als 20 ppm Schwefel, insbesondere von weniger als 10 ppm und ganz besonders vorteilhaft von weniger als 5 ppm Schwefel aufweist, bevor er der Stromerzeugungsanlage zugeführt wird.

8. Vorrichtung zur Durchführung des Verfahrens nach einem der Ansprüche 1 bis 7, mit einer Stromerzeugungseinrichtung, mit einem Mittel zur Reduzierung des Schwefelgehaltes eines schwefelhaltigen Kraftstoffs, sowie mit einer Antriebsturbine, **dadurch gekennzeichnet,**
- **dass** die Antriebsturbine Mittel zur Übertragung von Wärme auf den flüssigen Kraftstoff aufweist,
- **dass** das Mittel zur Reduzierung des Schwefelgehaltes eines schwefelhaltigen Kraftstoffs wenigstens eine Membran umfasst, die in unmittelbarer Nähe zur Antriebsturbine angeordnet ist,
- **dass** die Vorrichtung eine Zuführungsleitung zur Zuführung der schwefelarmen Fraktion des Kraftstoffs von dem Mittel zur Reduzierung des Schwefelgehaltes eines schwefelhaltigen Kraftstoffs zur Stromerzeugungseinrichtung aufweist,
und
- **dass** eine Zuführungsleitung zur Zuführung der schwefelreichen Fraktion des Kraftstoffs von der Membran zur Antriebsturbine vorgesehen ist.

9. Vorrichtung nach Anspruch 8, mit wenigstens einer Hochtemperatur-Polymer-Brennstoffzelle als Stromerzeugungseinrichtung.

10. Vorrichtung nach einem der Ansprüche 8 bis 9, mit einem Wärmtauscher in der Abgasleitung der Antriebsturbine oder mit einem Wärmtauscher in einem Verdichter der Antriebsturbine als Mittel zur Wärmeübertragung.

11. Vorrichtung nach einem der Ansprüche 8 bis 10, bei der ein Mittel zur Aufteilung des flüssigen Kraftstoffs benachbart zur Antriebsturbine angeordnet ist.

## Claims

1. Method for reducing the sulphur content of a liquid fuel containing sulphur for a mobile power generating unit, which is operated in combination with a driving turbine in an aircraft, in which the driving turbine is operated with a liquid fuel containing sulphur, with the steps
- liquid fuel containing sulphur is heated through the heat energy of the driving turbine,
- the heated liquid fuel containing sulphur is desulphurised at least partly in the vicinity of the driving turbine releasing heat,
- in which the sulphur content is reduced through at least one membrane and in which, apart from a low-sulphur fraction, a high-sulphur fraction is obtained, which is supplied to the driving turbine,
- the low-sulphur fraction of the fuel is supplied to the power generating unit.

2. Method according to claim 1, in which a high-temperature polymer fuel cell or a high-temperature polymer fuel cell stack is used as a power generating unit.

3. Method according to one of claims 1 to 2, in which the heat required is taken from the exhaust gas of the driving turbine or a compressor of the driving turbine.

4. Method according to one of claims 1 to 3, in which a vacuum of less than 100 mbar, particularly 50 mbar, is applied to at least one membrane.

5. Method according to one of claims 1 to 4, in which less than 15% by volume of the fuel required for the driving turbine and the power generating unit, particularly less than 5% by volume of the fuel, is supplied as low-sulphur fuel to the power generating unit.

6. Method according to one of claims 1 to 5, in which the fuel is heated to a temperature above 60°C, particularly a temperature above 80°C, before reducing the sulphur content.

7. Method according to one of claims 1 to 6, in which the low-sulphur fuel has a sulphur content of less than 20 ppm of sulphur, particularly less than 10 ppm and quite particularly advantageously less than 5 ppm of sulphur, before it is supplied to the power generating unit.

8. Device for carrying out the method according to one of claims 1 to 7, with a power generating unit, with a means for reducing the sulphur content of a fuel containing sulphur as well as with a driving turbine, **characterised in that**
- the driving turbine has a means for transferring heat to the liquid fuel,
- the means for reducing the sulphur content of a fuel containing sulphur comprises at least one membrane, which is arranged in the immediate vicinity of the driving turbine,
- the device has a supply line for supplying the low-sulphur fraction of the fuel from the means for reducing the sulphur content of a fuel containing sulphur to the power generating unit
and
- a supply line is provided for supplying the high-sulphur fraction of the fuel from the membrane to the driving turbine.

9. Device according to claim 8, with at least one high-temperature polymer fuel cell as a power generating unit.

10. Device according to one of claims 8 to 9, with a heat exchanger in the exhaust gas line of the driving turbine or with a heat exchanger in a compressor of the driving turbine as a means for transferring heat.

11. **Device according to one of claims 8 to 10, in which a means for distributing the liquid fuel is arranged next to the driving turbine.**

## Revendications

1. Procédé de réduction de la teneur en soufre d'un carburant liquide, contenant du soufre pour un appareil de génération de courant mobile, qui est utilisé en combinaison avec une turbine d'entraînement dans un avion, dans lequel la turbine d'entraînement est utilisée avec un carburant liquide contenant du soufre, avec les étapes
- le carburant liquide contenant du soufre est chauffé par l'énergie thermique de la turbine d'entraînement,
- le carburant liquide contenant du soufre chauffé est désulfuré au moins partiellement à proximité de la turbine d'entraînement émettant de la chaleur,
- dans lequel la réduction de la teneur en soufre est effectuée par au moins une membrane et où outre une fraction pauvre en soufre, une fraction riche en soufre est obtenue, laquelle est fournie à la turbine d'entraînement,
- la fraction pauvre en soufre du carburant est fournie au dispositif de génération de courant.

2. Procédé selon la revendication 1, où une cellule de combustible en polymère haute température ou une pile de cellules de combustible en polymère haute température est utilisée comme dispositif de génération de courant.

3. Procédé selon l'une quelconque des revendications 1 à 2, où la chaleur nécessaire est retirée des gaz d'échappement de la turbine d'entraînement ou d'un compresseur de la turbine d'entraînement.

4. Procédé selon l'une quelconque des revendications 1 à 3, où un vide de moins de 100 mbars, en particulier de 50 mbars est créé sur au moins une membrane.

5. Procédé selon l'une quelconque des revendications 1 à 4, où moins de 15 % en volume du carburant nécessaire pour la turbine d'entraînement et le dispositif de génération de courant, en particulier moins de 10,5 % en volume du carburant est fourni comme carburant pauvre en soufre du dispositif de génération de courant.

6. Procédé selon l'une quelconque des revendications 1 à 5, où le carburant est chauffé avant la réduction de la teneur en soufre à une température supérieure à 60 °C, en particulier à une température supérieure à 80 °C.

7. Procédé selon l'une quelconque des revendications 1 à 6, pour lequel le carburant pauvre en soufre présente une teneur en soufre de moins de 20 ppm de soufre, en particulier de moins de 10 ppm et de façon tout particulièrement avantageuse de moins de 5 ppm de soufre, avant qu'il ne soit fourni à l'installation de génération de courant.

8. Dispositif de mise en oeuvre du procédé selon l'une quelconque des revendications 1 à 7, avec un dispositif de génération de courant, avec un moyen de réduction de la teneur de soufre d'un carburant contenant du soufre, ainsi qu'avec une turbine d'entraînement, **caractérisé en ce que**
- la turbine d'entraînement présente des moyens pour la transmission de la chaleur au carburant liquide,
- le moyen de réduction de la teneur en soufre d'un carburant contenant du soufre comporte au moins une membrane qui est agencée à proximité directe de la turbine d'entraînement,
- le dispositif présente une conduite d'alimentation pour l'alimentation de la fraction pauvre en soufre du carburant du moyen de réduction de la teneur en soufre d'un carburant contenant du soufre au dispositif de génération de courant, et
- une conduite d'alimentation est prévue pour l'alimentation de la fraction riche en soufre du carburant de la membrane à la turbine d'entraînement.

9. Dispositif selon la revendication 8, avec au moins une cellule de combustible en polymère haute température comme dispositif de génération de courant.

10. Procédé selon l'une quelconque des revendications 8 à 9, avec un échangeur de chaleur dans la conduite de gaz d'échappement de la turbine d'entraînement ou avec un échangeur de chaleur dans un compresseur de la turbine d'entraînement comme moyen de transmission thermique.

11. Procédé selon l'une quelconque des revendications 8 à 10, pour lequel un moyen de répartition du carburant liquide est agencé de façon contiguë à la turbine d'entraînement.
